# EUROPEAN PATENT APPLICATION

(11) **EP 3 206 005 A1**
(43) Date of publication of application: **16.08.2017**
(21) Application number: 17155396.9
(22) Date of filing: 09.02.2017
(51) Int. Cl.: G01M 15/02, G01M 15/04

(54) **TRANSMISSION DEVICE**

(30) Priority: 10.02.2016 GB 201602338
(71) Applicant: Linchpin Plant Limited, Nuneaton, Warwickshire CV10 0TH (GB)
(72) Inventor: INGLIS, Malcolm R, Nuneaton, Warwickshire CV10 0TH (GB)
(74) Representative: Browne, Robin Forsythe

(57) **Abstract**

A transmission device for testing an engine, the device comprising:
a bell housing including an open end and a base end opposite the open end; and
a cartridge removably mounted to the bell housing, the cartridge comprising a support housing and a shaft rotatably mounted to the support housing, wherein the shaft comprises a first end adapted to couple directly or indirectly to the crankshaft of an engine and a second end adapted to couple directly or indirectly to a testing apparatus;
the cartridge being releasably mounted on the base end of the bell housing;
wherein the support housing and the shaft extend through the base end into the bell housing.

## Description

This invention relates generally to a transmission device. More specifically, although not exclusively, this invention relates to a transmission device for connecting an engine to a testing apparatus, for example a dynamometer.

Engine testing is a vital stage in the development of modern vehicles. Such testing involves the verification of performance characteristics, reliability and component strength and can involve testing the engine to failure. As such, the mechanical coupling between the engine and the test equipment must be capable of withstanding substantial stresses. Otherwise, such couplings may be susceptible to premature failure, for example prior to completion of the testing regime.

It is known to modify the gearbox in the drivetrain of a vehicle that incorporates the engine to be tested in order to provide such a coupling. However, the applicant has observed that such modification can be expensive and is in some cases susceptible to failure.

There is therefore a need for a transmission device that provides a coupling for connecting one or more engines to a testing apparatus, particularly such a device that is robust and reliable. It is a first non-exclusive aim of the invention to provide a transmission device that is versatile and adaptable to suit multiple engine types. It is another, more general non-exclusive aim of the invention to provide a transmission device that is more robust and reliable that known arrangements.

According to a first aspect of the invention there is provided a transmission device for testing an engine, the device comprising:
a bell housing including an open end and a base end opposite the open end; and
a cartridge removably mounted to the bell housing, the cartridge comprising a support housing and a shaft rotatably mounted to the support housing, wherein the shaft comprises a first end adapted to couple directly or indirectly to the crankshaft of an engine and a second end adapted to couple directly or indirectly to a testing apparatus;
the cartridge being releasably mounted on the base end of the bell housing;
wherein the support housing and the shaft extend through the base end into the bell housing.

In an embodiment of the invention there is provided a transmission device, e.g. for testing an engine, the device comprising a bracket or housing, e.g. a bell housing, and a cartridge mounted to the bracket or housing, the cartridge comprising a support and a shaft rotatably mounted to the support, wherein the shaft comprises a first end for coupling or adapted to couple, e.g. directly or indirectly, to the crankshaft of an engine and a second end for coupling or adapted to couple, e.g. directly or indirectly, to a testing apparatus.

The provision of a removable cartridge enables the same device to be used for multiple engine configurations, for example both manual and automatic transmission arrangements.

The support may comprise a support housing. The shaft may be rotatably mounted to the support at two or more spaced positions. The support may be tubular, for example with open ends. The shaft may extend through the support, for example out of each end, e.g. each open end. The shaft may be rotatably mounted at or adjacent each end, e.g. each open end, of the support. The shaft may be rotatably mounted to the support by one or more bearings. Where the shaft is rotatably mounted to the support at two or more spaced positions, e.g. at each end of the support, the shaft may be rotatably mounted by a respective bearing.

The support housing may be tubular with open ends and the shaft may extend through the support housing out of each end and may be rotatably mounted at or adjacent each open end of the support housing by a respective bearing.

Additionally or alternatively, the support may comprise a mounting feature, e.g. for mounting or removably mounting the cartridge to the bracket or housing or bell housing, hereinafter bell housing but this term may be replaced with bracket or housing. The mounting feature may be intermediate the ends of the support. The mounting feature of the support may comprise a radial step, flange or other element or member suitable to mount the cartridge to the bell housing.

The bell housing may comprise a stepped recess, depression or hole, e.g. for engaging the radial step, flange or other mounting element or member of the support.

The bell housing may comprise a pattern of mounting holes, e.g. a circular pattern of mounting holes. The radial step or flange or other mounting element or member may comprise a pattern of holes or radial recesses, e.g. a corresponding pattern, for example wherein one or each pattern is configured to receive a fastener in each of one or more of the holes and/or a dowel in each of one or more of the holes or a respective fastener in each hole. Fasteners and/or dowels may extend through the holes in one or each pattern, e.g. to mount and/or locate the cartridge to the bell housing and/or to prevent relative rotation between the support and the bell housing. In embodiments, each of some of the holes, e.g. two or more holes, comprise a dowel extending therethrough, for example to locate the support bracket relative to the bell housing. Each of some of the holes, e.g. two or more holes or the rest of the holes, may comprise a fastener extending therethrough.

The bell housing, the cartridge, the support housing and the shaft may be coaxially aligned along a central axis.

The device may comprise a support bracket, which may extend from the bell housing, e.g. from a base of the bell housing. The support bracket may be curved or part-cylindrical. The support bracket may comprise a curved cross-section, for example across a plane parallel to part, e.g. the base, of the bell housing. The support bracket may comprise one or more holes or mounting holes and/or the bell housing may comprise one or more corresponding holes or support bracket mounting holes. The support bracket may be mounted to the bell housing by one or more fasteners and/or one or more dowels. Each of one or more of the holes or mounting holes of the support bracket and/or each of one or more of the holes or support bracket mounting holes of the bell housing may comprise a fastener or dowel extending therethrough. In embodiments, each of some of the holes, e.g. two or more holes, comprise a dowel extending therethrough, for example to locate the support bracket relative to the bell housing. Each of some of the holes, e.g. two or more holes or the rest of the holes, may comprise a fastener extending therethrough. The support bracket may comprises a flexible mount, for example at or adjacent its free end. The flexible mount may be resilient and/or comprise a resilient mount. The flexible mount may be formed of a resilient or elastomeric material, such as natural or synthetic rubber or any other elastomeric material.

The support bracket may extend past the second end of the shaft when coupled directly or indirectly to a testing apparatus.

The bell housing may comprise an opening or hole or window, for example an access window. The opening or hole or window may be located in a side wall or circumferential surface of the bell housing. Preferably, the opening or hole or window provides access to the first end of the shaft and/or to the engine, e.g. for the placing, setting or accessing one or more sensors, test equipment or other component. Such opening or hole or window may enable the first end of the shaft to be accessed or to be coupled to or uncoupled from the crankshaft of the engine or some other intermediate component, such as a flywheel or flex plate or clutch plate.

In embodiments, the first end of the shaft comprises or is connected or connectable to a flywheel and/or a flex plate. The first end of the shaft may be adapted to couple to the crankshaft of an engine via a flywheel and/or a flex plate. In embodiments, the first end of the shaft comprises or is connected or connectable to a clutch plate. The first end of the shaft may be adapted to couple to the crankshaft of an engine via a clutch plate. At least one or each end of the shaft may comprise an engaging or coupling means, for example one or more splines or keyways, which may be on an external surface of the shaft or may extend radially outwardly or inwardly. The device or cartridge may comprise a flange or bracket, which may be mounted to the first end or the second end of the shaft. The device or cartridge may comprise a flange or bracket mounted to each of the first and second ends of the shaft. The or each flange or bracket may comprise an engaging or coupling means, for example it may be hollow and/or comprise a hole with coupling means such as one or more splines or keyways. The coupling means may be on an internal surface or a surface of the hole and/or may extend radially inwardly. The coupling means of the flange or bracket may comprise a projection from or a depression in the surface. The flange or bracket at the first end may comprise an engine coupling flange or bracket and/or the flange or bracket at the second end may comprise a test device coupling flange or bracket. Preferably, the flange or bracket comprises a bracket with the coupling means and including a radial flange extending from the coupling means.

The first end of the shaft may be located adjacent the open end of the bell housing when coupled directly or indirectly to the crankshaft of an engine.

The device may comprise a revolution counter, e.g. for measuring the number of revolutions of the cartridge shaft. The revolution counter may be for measuring the total number of revolutions of the cartridge shaft or may be resettable or capable of being zeroed or reset to zero. The revolution counter may be mounted to the bell housing, but is preferably mounted to the cartridge, e.g. the support and/or operatively connected to the shaft. The revolution counter may comprise a sensor that may be operatively connected to the shaft for detecting a revolution thereof.

The device may comprise one or more thermocouples, which may be associated with at least one of the bearings, e.g. for detecting or measuring a temperature associated therewith. The one or more thermocouples may be mounted relative to and/or operable to detect or measure a temperature associated with at least one of the bearings. The device may comprise a thermocouple associated with each bearing.

The device may comprise a run time recorder, e.g. for measuring the run time of the cartridge shaft. The run time recorder may be for measuring the total run time of the cartridge shaft or may be resettable or capable of being zeroed or reset to zero. The run time recorder may be mounted to the bell housing, but is preferably mounted to the cartridge, e.g. the support and/or operatively connected to the shaft. The run time recorder may comprise a sensor that may be operatively connected to the shaft for detecting rotation thereof. In embodiments, the revolution counter and run time recorder are connected to a common sensor for detecting a revolution and/or rotation thereof.

The device may comprise a levelling surface or levelling bracket. The levelling surface or levelling bracket may extend along a longitudinal dimension of the device. The levelling surface or levelling bracket may be for receiving a level.

The bell housing may comprise one or more reinforcing ribs. At least one of the reinforcing ribs may be substantially flat and/or comprise a mounting feature thereon or therein, e.g. for mounting one or more test sensors or a test device and/or one or more brackets, such as one or more exhaust brackets, and/or a heat shield.

The bell housing may comprise an open end and/or a base, e.g. opposite the open end. The open end of the bell housing may comprise a mounting flange, e.g. for mounting the device to an engine. The cartridge may be mounted, e.g. releasably mounted, to and/or extend through the base of the bell housing.

The mounting flange of the bell housing may be substantially free of mounting holes, e.g. to enable a predetermined pattern of mounting holes to be formed or machined therein.

According to a second aspect of the invention there is provided a method of testing an engine, the method comprising:
mounting to a bell housing including an open end and a base end opposite the open end a cartridge comprising a support housing and a shaft rotatably mounted to the support housing, so that the support housing and the shaft extend through the base end into the bell housing, the cartridge being releasably mounted on the base end of the bell housing;
mounting the bell housing to the engine to be tested;
coupling directly or indirectly a first end of the shaft to the crankshaft of the engine; and
coupling directly or indirectly a second end of the shaft to a testing apparatus and testing the engine.

In an embodiment of the invention there is provided a method of testing an engine, e.g. using the transmission device described above. The method may comprise one or more or each of mounting to a bracket or housing or bell housing a cartridge comprising a support and/or a shaft rotatably mounted to the support, mounting the bell housing to the engine to be tested, coupling, e.g. directly or indirectly a first end of the shaft to the crankshaft of the engine, coupling, e.g. directly or indirectly, a second end of the shaft to a testing apparatus and testing the engine.

The method may comprise forming or machining, e.g. into a mounting flange of the bell housing, mounting holes, e.g. to suit the engine to be tested, prior to the mounting of the bell housing to the engine.

According to a third aspect of the invention there is provided a test rig, for example which comprises a transmission device as described above.

According to a fourth aspect of the invention there is provided the use of a transmission device as described above.

According to a fifth aspect of the invention there is provided a kit of parts for assembly into a transmission device for testing an engine, the kit comprising:
a bell housing including an open end and a base end opposite the open end; and
one or more cartridges comprising a support housing and a shaft rotatably mounted to the support housing, the one or more cartridges for releasably mounting on the base end of the bell housing so that the support housing and the shaft extend through the base end into the bell housing; wherein the shaft comprises a first end adapted to couple directly or indirectly to the crankshaft of an engine and a second end adapted to couple directly or indirectly to a testing apparatus.

In an embodiment of the invention there is provided a kit of parts for assembly into a transmission device, e.g. for testing an engine, for example a device as described above. The kit may comprise one or more or each of a bracket or housing or bell housing and one or more cartridges, e.g. for removably mounting to the bell housing. The or each cartridge may comprise a support and/or a shaft, which may be rotatably mounted to the support. The shaft may comprise a first end for coupling or adapted to couple, e.g. directly or indirectly to the crankshaft of an engine and a second end for coupling or adapted to couple, e.g. directly or indirectly, to a testing apparatus.

The one or more cartridges of the kit may comprise two or more cartridges, e.g. different cartridges. The shaft of each of the cartridges may comprise a first end for coupling or adapted to couple, e.g. directly or indirectly, to the crankshaft of a respective, e.g. different, engine configuration.

The first end of the shaft of one of the cartridges may comprise or be connected or connectable to a flywheel and/or a flex plate. Additionally or alternatively, the first end of the shaft of another of the cartridges may comprise or be connected to or connectable to a clutch plate.

The bell housing may comprise an open end and/or a base, which may be opposite the open end. The open end may comprise a mounting flange, e.g. for mounting the device to an engine. The cartridge may be mounted, e.g. releasably mounted, to and/or extending through the bell housing or the base thereof. The mounting flange may be substantially free of mounting holes.

For the avoidance of doubt, any of the features described herein apply equally to any aspect of the invention. For example, the kit may comprise any one or more features and/or components of the transmission device relevant thereto and vice versa. Similarly, the method may comprise any one or more features or steps relevant to one or more features of the transmission device or kit.

Another aspect of the invention provides a computer program element comprising and/or describing and/or defining a three-dimensional design for use with a simulation means or a three-dimensional additive or subtractive manufacturing means or device, e.g. a three-dimensional printer or CNC machine, the three-dimensional design comprising an embodiment of the transmission device or one or more components thereof and described above.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. For the avoidance of doubt, the terms "may", "and/or", "e.g.", "for example" and any similar term as used herein should be interpreted as non-limiting such that any feature so-described need not be present. Indeed, any combination of optional features is expressly envisaged without departing from the scope of the invention, whether or not these are expressly claimed. The applicant reserves the right to change any originally filed claim or file any new claim accordingly, including the right to amend any originally filed claim to depend from and/or incorporate any feature of any other claim although not originally claimed in that manner.

Embodiments of the invention will now be described by way of example only with reference to the accompanying drawings in which:
Figure 1 is a perspective view of a transmission device according to an embodiment of the invention;
Figure 2 is a top view of the transmission device of Figure 1;
Figure 3 is a section view through line A-A of Figure 2;
Figure 4 is a top view of a transmission device according to another embodiment of the invention; and
Figure 5 is a section view though line B-B of Figure 4.

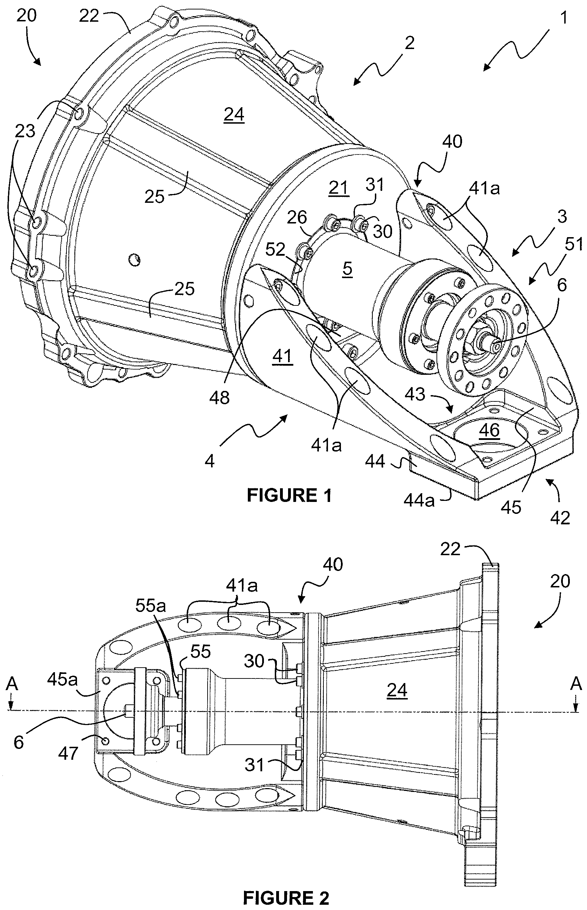

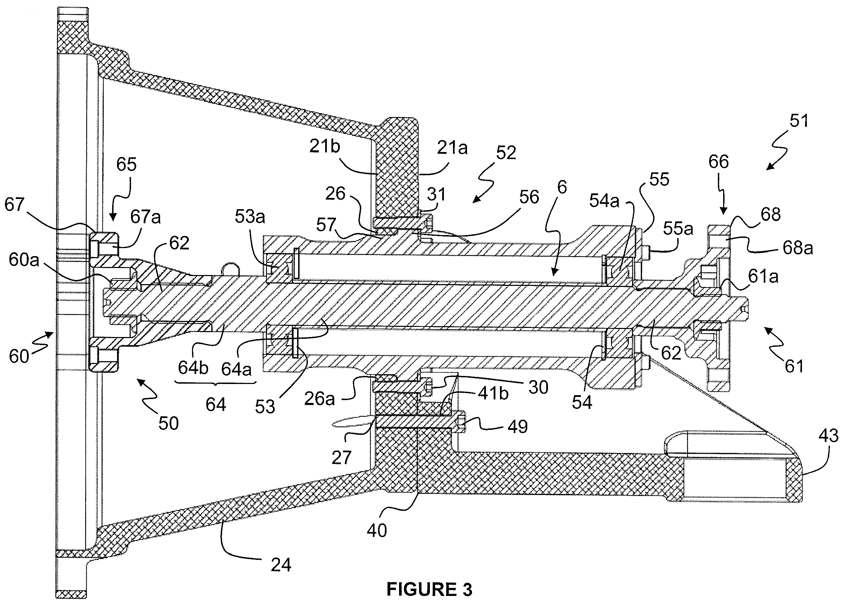

Referring now to Figures 1 to 3, there is shown a transmission device 1 for testing an engine (not shown). The transmission device 1 includes a bell housing 2, a cartridge 3 that is removably mounted to the bell housing 2 and a support bracket 4. The cartridge 3 includes a support housing 5 and a shaft 6 rotatably mounted to the support housing 5.

The bell housing 2 is substantially conical in shape and includes an open, mounting end 20 and a closed base 21 at its other end. The mounting end 20 includes a mounting flange 22 with a series of mounting holes 23 extending therethrough for receiving bolt fasteners (not shown) to mount the transmission device 1 to an engine (not shown). Although not shown, the mounting flange 22 may also include dowel holes (not shown) for receiving alignment dowels (not shown). In this embodiment, the base 21 is circular in plan with a smaller diameter than the mounting end 20, which is also substantially circular in plan. The base 21 is joined to the mounting end 20 by a conical body 24 that includes four ribs 25 extending axially along and spaced equally about an outer surface of the body 24. The ribs 25 have a substantially flat outer surface to enable one or more threaded holes to be formed and/or other mounting feature(s) to be mounted or incorporated thereon or therein for mounting one or more test sensors or a test device (not shown). In embodiments, the device 1 includes a levelling bracket (not shown) mounted or secured to one of the ribs 25 with a levelling surface extending along a longitudinal dimension of the device for receiving a level (not shown). In other embodiments, the bell housing 2 or support bracket 4 includes a levelling surface (not shown) directly thereon that extends along a longitudinal dimension of the device for receiving a level (not shown).

The base 21 includes a stepped hole 26 having a first, larger diameter on its outermost side 21a and a second, smaller diameter on its innermost side 21b, thereby creating an inwardly extending radial flange 26a. This inwardly extending radial flange 26a includes eight equally spaced threaded holes therethrough and the larger diameter includes part-cylindrical recesses (not shown) aligned with the threaded holes. The base 21 also includes a series of nine threaded holes 27 about its periphery.

The support bracket 4 is part-cylindrical in this embodiment with a crescent shaped first, mounting end 40 with a body 41 that tapers to a flat second, support end 42. The bracket 4 includes a mounting base 43 at the support end 42, which includes a rectangular projection 44 on its circumferential lower or outer surface terminating at a flat, rectangular lower surface 44a and a rectangular depression 45 in its circumferential upper or inner surface defining a flat, rectangular upper surface 45a. A central hole 46 extends from the upper surface 45a of the depression 45 to the lower surface 44a of the projection 44 for receiving a rubber mount (not shown). Four mounting holes 47 also extend from the upper surface 45a to the lower surface 44a for receiving fasteners to secure the rubber mount within the central hole 46.

The bracket 4 also includes an internal mounting flange 48 projecting inwardly from the body 41 at the mounting end 40 and nine mounting holes 41 a, 41 b extending axially through the body 41. Eight of the mounting holes 41a extend from the tapered upper surface 41c of the body 41 to the mounting end 40. One of the mounting holes 41b extends through the centre of the internal mounting flange 48. Each of the mounting holes 41a, 41b receives a mounting bolt 49 that threadedly engages a respective threaded hole 27 in the base 21 of the bell housing 2 to mount the bracket 4 to the bell housing 2. Although not shown, the bracket 4 and/or the base 21 of the bell housing 2 may also include dowel holes (not shown) for receiving alignment dowels (not shown).

The support housing 5 in this embodiment is hollow or tubular and substantially cylindrical in shape. The support housing 5 includes a first, engine coupling end 50, a second, dynamometer mounting end 51 and a radial mounting flange 52 between the first and second ends 50, 51, but closer to the first end 50 in this embodiment. Each of the first and second ends 50, 51 is enlarged slightly and includes an internal recess within which is received a respective retaining ring 53, 54 and a respective bearing 53a, 54a. The second end 51 also includes a bracing plate 55 mounted thereto by six bolts 55a extending through holes in the bracing plate 55 and into threaded holes in the second end 51. The bearing 54a at the second end 51 is captivated between the bracing plate 55 and the retaining ring 54.

The mounting flange 52 is stepped with a first portion 56 having a larger diameter than a second portion 57. The first portion 56 of the mounting flange 52 includes eight equally spaced part-cylindrical recesses about its periphery. The recesses of the mounting flange 52 are configured to be aligned with the threaded holes in the radial flange 26a of the base 21 of the bell housing 2. Mounting bolts 30 carrying washers 31 are inserted into the recesses and engaged with the threaded holes in the radial flange 26a to secure the mounting flange 52 to the bell housing 2, thereby removably mounting the cartridge 3 to the bell housing 2.

The shaft 6 includes a first, engine coupling end 60 and a second, dynamometer mounting end 61. Each end 60, 61 carries an external thread that is threadedly received and engaged by a respective securing nut 60a, 61a. Each end 60, 61 also includes a respective splined portion 62, 63 extending from the externally threaded portion toward its central region 64. The central region 64 of the shaft 6 includes a first portion 64a received within each of the bearings 53a, 54a and a second portion 64b having a larger diameter such that the shaft 6 is rotatably supported at two spaced positions corresponding to the locations of the bearings 53a, 54a. The second portion 64b creates a step at the end of the first portion 64a that abuts the bearing 53a at the first end 50 of the support housing 5 such that it is captivated between the second portion 64b of the central region 64 and the retaining ring 53.

The shaft 6 has an engine coupling bracket 65 mounted to the engine coupling end 60, which includes an internal spline that mates with the splined portion 62 and is retained thereon by the securing nut 60a. Similarly, a dynamometer coupling bracket 66 is mounted to the dynamometer mounting end 61, which also includes an internal spline that mates with the splined portion 63 and is retained thereon by the securing nut 61a. Each of the brackets 65, 66 includes a respective mounting flange 67, 68 with a series of threaded mounting holes 67a, 68a about its periphery.

In use, the engine coupling end 60 of the shaft 6 is coupled to the crankshaft of an engine (not shown) via a flywheel (not shown) and flex plate (not shown) mounted to the mounting flange 67 of the engine coupling bracket 65 by bolts (not shown) that threadedly engage the mounting holes 67a in the mounting flange 67. The transmission device 1 is mounted to an engine (not shown) to be tested by bolting the flange 22 thereto and securing the support bracket 4 to a support stand (not shown) via the rubber mount (not shown). Similarly, the dynamometer coupling bracket 66 is secured to a dynamometer (not shown) using bolts (not shown) that threadedly engage the mounting holes 68a in the mounting flange 68. The engine (not shown) is then ready for testing.

In this embodiment, the series of mounting holes 23 are designed to suit a particular type of engine (not shown). However, according to an optional feature of the invention, the flange 22 of the bell housing 2 may be free of mounting holes 23 to enable the transmission device 1 to be modified on demand for use with a particular engine type and configuration.

Similarly, the cartridge 3 may comprise a different configuration to accommodate a different engine configuration. For example, the engine coupling end 60 and/or the engine coupling bracket 65 may be positioned and/or configured to accommodate a different engine configuration, for example the clutch plate of a manual transmission configuration. The support housing 4 may be designed to receive bearings 53a, 54a of any configuration. In a particular preferred embodiment, the support housing 4 is configured such that it is able to receive either standard bearings 53a, 54a or high stress bearings 53a, 54a.

It is envisaged that the transmission device 1 may be provided in kit form, for example including a bell housing 2 and cartridge 3 separate therefrom. The kit may include two or more cartridges, each of which may have a different configuration. The bell housing 2 may include a mounting flange 22 free of mounting holes 23. Additionally or alternatively, the kit may include one or more further bell housings 2, each of which may have a mounting flange either free of mounting holes 23 or with a different series of mounting holes 23.

Other arrangements are also envisaged without departing from the scope of the invention.

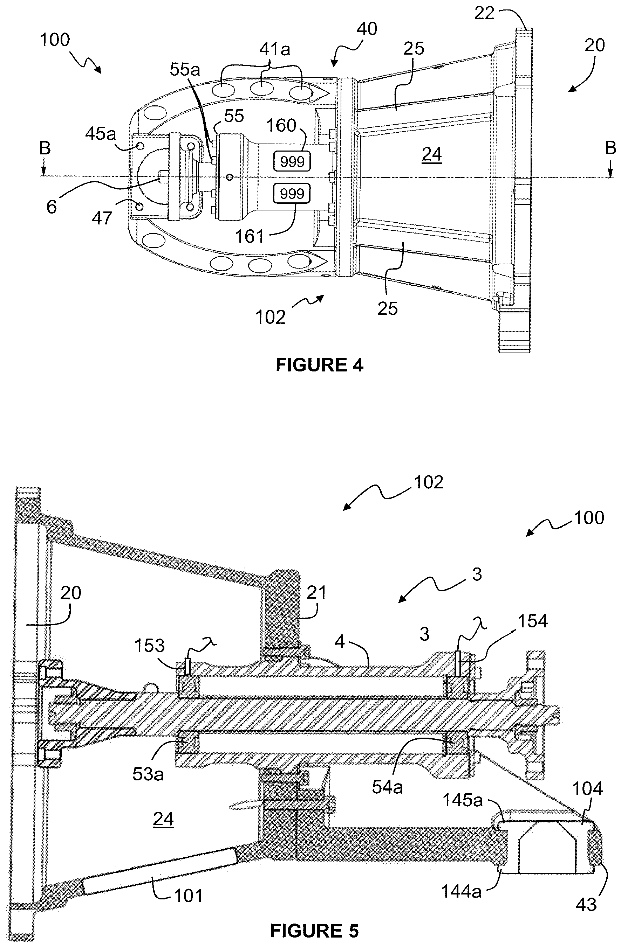

Turning now to Figures 4 and 5, there is shown a transmission device 100 according to another embodiment of the invention similar to the transmission device 1 according to the first embodiment, wherein like references depict like features that will not be described further herein. The transmission device 100 according to this embodiment differs from that of the first embodiment in that the bell housing 102 includes an access window 101 (shown only in Figure 5), a revolution counter 160, a run time recorder 161, a rubber mount 104 (shown only in Figure 5) and a thermocouple 153, 154 associated with each bearing 53a, 54a.

The access window 101 is through the body 24 of the bell housing 102 and extends from the base 21 to the mounting end 20 and between the two lowermost ribs 25. The access window 101 enables access to the coupling between the cartridge 3 and the engine (not shown) while the bell housing 102 is mounted to the engine (not shown). Thus, the coupling with the engine (not shown) may be monitored both visually and sensing equipment may be accessible or may include cables and the like that extend through the access window 101 in use.

The revolution counter 160 is mounted to the support housing 4 of the cartridge 3 and includes a sensor (not shown) that measures the number of revolutions of the shaft 6. Similarly, the run time recorder 161 is also mounted to the support housing 4 of the cartridge 3 and includes a sensor (not shown) that measures the run time of the shaft 6. In this embodiment, the revolution counter 160 and run time recorder 161 are both configured to record the total number of revolutions and run time of the shaft 6 respectively. In other embodiments, it is also envisaged that a respective reset means, such as a button (not shown), may be included to reset the revolution counter 160 and/or the run time recorder 161.

The rubber mount 104 is substantially in the form of a hollow cylinder with lower and upper rectangular flanges 144a, 145a corresponding substantially to the lower and upper surfaces 44a, 45a of the mounting base 43 of the support bracket 4. The upper part of the inner surface of the rubber mount 104 tapers to provide an interference fit with a mounting feature (not shown) on the support stand (not shown) to which the support bracket 4 is mounted in use.
The thermocouples 153, 154 are each mounted within a recess in the support housing 4 and are configured to measure the temperature of the material of the support housing 4 that surrounds each of the bearings 53a, 54a. This enables the operator (not shown) to ascertain the thermal load on the bearings 53a, 54a to anticipate and/or prevent failure conditions.

It will be appreciated by those skilled in the art that several variations to the aforementioned embodiments are envisaged without departing from the scope of the invention. For example, the bell housing 2, 102 need not be substantially conical in shape and may be any suitable shape, such as cylindrical or part-cylindrical or any other suitable shape that enables it to carry out its function. The mounting flange 52 may be larger, e.g. incorporating holes (not shown) instead of recesses, or may be replaced by another mounting feature. The other mounting feature may, for example, include one or more splines or a key (not shown) that may engage one or more splines, rebates or keyways (not shown) in the base 21 of the bell housing 2. Such a mounting feature may be captivated between the radial flange 26a and, for example, a cover or bracing plate (not shown). Other mounting features are also envisaged without departing from the scope of the invention. The device 1, bell housing 2 or cartridge 3 may include one or more other sensors or test devices. For example, the support housing 4

It will also be appreciated by those skilled in the art that any number of combinations of the aforementioned features and/or those shown in the appended drawings provide clear advantages over the prior art and are therefore within the scope of the invention described herein.

## Claims

1. A transmission device (1) for testing an engine, the device (1) comprising:
a bell housing (2) including an open end (20) and a base end (21) opposite the open end (20); and
a cartridge (3) removably mounted to the bell housing (2), the cartridge (3) comprising a support housing (5) and a shaft (6) rotatably mounted to the support housing (5), wherein the shaft (6) comprises a first end adapted to couple directly or indirectly to the crankshaft of an engine and a second end adapted to couple directly or indirectly to a testing apparatus;
the cartridge (3) being releasably mounted on the base end (21) of the bell housing (2);
wherein the support housing (5) and the shaft (6) extend through the base end (21) into the bell housing (2).

2. A device (1) according to claim 1, wherein the shaft (6) is rotatably mounted to the support housing (5) at two or more spaced positions; and
wherein the support housing (5) is tubular with open ends and the shaft (6) extends through the support housing (5) out of each end and is rotatably mounted at or adjacent each open end of the support housing (5) by a respective bearing.

3. A device (1) according to claim 1 or 2, wherein the bell housing (2), the cartridge (3), the support housing (5) and the shaft (6) are coaxially aligned along a central axis.

4. A device (1) according to any preceding claim, wherein the first end of the shaft (6) is located adjacent the open end (20) of the bell housing (2) when coupled directly or indirectly to the crankshaft of an engine.

5. A device (1) according to any preceding claim, wherein the open end (20) of the bell housing (2) comprises a mounting flange (22) for mounting the device (1) to an engine; and
wherein the mounting flange (22) of the bell housing (2) is free of mounting holes.

6. A device (1) according to any preceding claim, wherein the support housing (5) comprises a mounting feature intermediate its ends for removably mounting the cartridge (3) to the bell housing (2), the mounting feature comprising a radial step or flange;
wherein the bell housing (2) further including a stepped hole (26) for engaging the radial step or flange of the support housing (5); and
wherein the bell housing (2) comprises a pattern of mounting holes and the radial step or flange comprises a corresponding pattern of holes or radial recesses through which respective fasteners and/or dowels extend to mount the cartridge (3) to the bell housing (2) and/or to prevent relative rotation between the support housing (5) and the bell housing (2).

7. A device (1) according to any preceding claim comprising a support bracket (4) extending from a base of the bell housing (2);
wherein the support bracket (4) is part-cylindrical and comprises a curved cross-section across a plane parallel to the base of the bell housing (2);
wherein the support bracket (4) extends past the second end of the shaft (6) when coupled directly or indirectly to a testing apparatus; and
wherein the support bracket (4) comprises a resilient flexible mount at or adjacent its free end.

8. A device (1) according to any preceding claim further comprising:
a revolution counter for measuring the number of revolutions of the cartridge shaft (6), wherein the revolution counter is mounted to the cartridge (3);
a run time recorder for measuring the run time of the cartridge shaft (6), wherein the run time recorder is mounted to the cartridge (3); and
a levelling surface extending along a longitudinal dimension of the device (1) or a levelling bracket for receiving a level.

9. A device (1) according to any preceding claim, wherein the bell housing (2) comprises one or more reinforcing ribs at least one of which comprises a mounting feature thereon for mounting an exhaust bracket or a test device.

10. A test rig comprising a device (1) according to any preceding claim.

11. Use of a device (1) according to any one of claims 1 to 9 for the testing of an engine.

12. Kit of parts for assembly into a transmission device (1) for testing an engine, the kit comprising:
a bell housing (2) including an open end (20) and a base end (21) opposite the open end (20); and
one or more cartridges (3) comprising a support housing (5) and a shaft (6) rotatably mounted to the support housing (5), the one or more cartridges (3) for releasably mounting on the base end (21) of the bell housing (2) so that the support housing (5) and the shaft (6) extend through the base end (21) into the bell housing (2);
wherein the shaft (6) comprises a first end adapted to couple directly or indirectly to the crankshaft of an engine and a second end adapted to couple directly or indirectly to a testing apparatus.

13. A kit of parts according to claim 12, wherein the one or more cartridges (3) comprises two or more different cartridges for removably mounting to the bell housing (2), the shaft (6) of each of the cartridges (3) comprising a first end adapted to couple directly or indirectly to the crankshaft of a respective different engine configuration;
wherein the first end of the shaft (6) of one of the cartridges (3) comprises a flywheel and/or a flex plate and/or the first end of the shaft (6) of another of the cartridges (3) comprises a clutch plate; and
wherein the bell housing (2) comprises an open end (20) and a base end (21) opposite the open end (20), the open end (20) comprising a mounting flange (22) for mounting the device to an engine, the cartridge (3) being releasably mounted to and extending through the base end (21) of the bell housing (2) and the mounting flange (22) being free of mounting holes.

14. Method of testing an engine, the method comprising:
mounting to a bell housing (2) including an open end (20) and a base end (21) opposite the open end (20) a cartridge (3) comprising a support housing (5) and a shaft (6) rotatably mounted to the support housing (5), so that the support housing (5) and the shaft (6) extend through the base end (21) into the bell housing (2), the cartridge (3) being releasably mounted on the base end (21) of the bell housing (2);
mounting the bell housing (2) to the engine to be tested;
coupling directly or indirectly a first end of the shaft (6) to the crankshaft of the engine; and
coupling directly or indirectly a second end of the shaft (6) to a testing apparatus and testing the engine.

15. A method according to claim 14 comprising forming into a mounting flange of the bell housing (2) mounting holes to suit the engine to be tested prior to the mounting of the bell housing (2) to the engine.
